# NEUE EUROPÄISCHE PATENTSCHRIFT

(11) **EP 2 165 817 B2**
(45) Veröffentlichungstag und Bekanntmachung des Hinweises auf die Entscheidung über den Einspruch: **25.07.2018**
(45) Hinweis auf die Patenterteilung: 10.09.2014
(21) Anmeldenummer: 09010207.0
(22) Anmeldetag: 07.08.2009
(51) Int. Cl.: B29C 39/02, A47L 17/02, B29C 70/64, B29C 59/00

(54) **Formteil, wie beispielsweise Küchenspülbecken, Waschbecken oder dergleichen, sowie Verfahren zum Herstellen eines solchen Formteils**
Moulded part, such as a kitchen sink, a washbasin or similar, and method for producing such a moulded part
Pièce de formage, comme par exemple un évier de cuisine, un lavabo ou analogue, et procédé de fabrication d'une telle pièce de formage

(30) Priorität: 17.09.2008 DE 102008047758
(43) Veröffentlichungstag der Anmeldung: 24.03.2010
(73) Patentinhaber: Schock GmbH, 94209 Regen (DE)
(72) Erfinder: Paternoster, Rudolf, 94269 Rinchnach (DE); Pledl, Xaver, 94227 Zwiesel (DE); Janke, Gudrun, Dr., 38640 Goslar (DE); Geier, Josef, 94209 Regen (DE)
(74) Vertreter: Lindner Blaumeier Patent- und Rechtsanwälte

(56) Entgegenhaltungen:
- EP-A1- 0 361 101
- EP-A1- 0 619 973
- EP-A1- 0 659 786
- EP-A1- 1 323 368
- EP-A2- 0 731 116
- EP-A2- 0 952 124
- WO-A2-00/28872
- DE-A1- 19 649 647
- JP-A- H05 117 008
- JP-A- H06 297 569
- JP-A- 2001 190 344
- US-A- 3 942 199
- US-A- 5 218 013
- US-A- 5 242 968
- US-A- 5 422 391
- US-A- 5 536 763
- US-A- 6 054 080
- US-A1- 2004 048 042
- Meinke: "Oberfächenmesstechnik" Fachhochschule für Technik und Wirtschaft Berlin 17. April 2008 (2008-04-17), XP002557443 Gefunden im Internet: URL:http://mb.f2.htw-berlin.de/fileadmin/d aten-pool/mb/MT/laborversuche/Oberflaeche. pdf> [gefunden am 2009-11-25]
- Corian spec data
- DuPont Corian Commercial Care in Use
- The Colours of Corian for Kitchen Workshops
- History of Corian

## Beschreibung

Die Erfindung betrifft ein Formteil, wie beispielsweise ein Küchenspülbecken, ein Waschbecken, eine Arbeitsplatte oder dergleichen, mit einer natursteinähnlichen bearbeiteten Oberfläche, hergestellt aus einem Kompositwerkstoff mit einem ausgehärteten polymeren Bindemittel und darin eingelagerten Füllstoffpartikeln durch Abformen einer vorzugsweise mehrfach verwendbaren Form, sowie ein Verfahren zum Herstellen eines solchen Formteils.

Aus der EP 0 361 101 B2 ist ein derartiges Formteil bekannt, das durch Variation der Größe und Farbe der eingesetzten Füllstoffpartikel die unterschiedlichsten Anforderungen an das äußere Erscheinungsbild erfüllen kann und dabei sehr gute Gebrauchseigenschaften aufweist, insbesondere eine gute Reinigungsfähigkeit, eine hohe Fleckfestigkeit und einen hohen Abriebwiderstand.

Sowohl für das gewünschte Erscheinungsbild als auch für die guten Gebrauchseigenschaften ist es bei den bekannten Formteilen wesentlich, dass die Oberfläche der Sichtseite vollflächig durch das Bindemittel gebildet ist.

Aus der US 5,536,763 A ist ein Verfahren zur Herstellung eines einfärbbaren Harzmaterials bekannt, das einen Füllstoffanteil von 10 bis 30 Gew. % aufweist, und das nach dem Aushärten auf der Oberfläche einer Wärmebehandlung ausgesetzt wird, damit die Oberfläche abschrumpft und ein Teil der Füllstoffpartikel an der Oberfläche zu liegen kommt.

Aus der EP 0 952 124 A2 ist ein Verfahren zur Herstellung von dünnen Platten aus einem Füllstoffpartikel aufweisenden Polymer-Kunststoff bekannt, wobei zunächst eine dicke Platte hergestellt wird und daraus anschließend dünne Platten herausgesägt werden. Beim Sägen werden die Füllstoffpartikel durchtrennt, so dass diese einen Teil der Oberfläche der dünnen Platte bilden.

Aus der DE 196 49 647 A1 ist ein aus einem elastomeren Material hergestellter Pressmantel für eine Pressvorrichtung zur Behandlung einer Warenbahn bekannt, wobei zur Verbesserung der Bahnabgabeeigenschaft in dem elastomeren Material Fremdteilchen eingebettet sind, die einen Teil der Oberfläche des Pressmantels bilden.

Aus JP 5-117008 A ist ein künstlicher Stein bestehend aus einer Bindemittelmatrix umfassend 20-80 Gew% Acrylharz und 80-20 Gew.% darin eingelagerter anorganischer Füllstoffe bekannt. Zur Verbesserung des Rutschwiderstands sind an der Oberfläche Nuten ausgebildet.

Seit langer Zeit sind Becken, Tröge und Platten aus Naturstein bekannt, die aufgrund ihrer hochwertigen Erscheinung im hochpreisigen Marktsegment erhältlich sind. Der Naturstein weist jedoch für den täglichen Gebrauch gravierende Nachteile auf, insbesondere beim Einsatz als Spüle oder als Becken, denn Naturstein ist fleckanfällig und schlecht zu reinigen. Außerdem ist Naturstein spröde, so dass hohe Wandstärken gewählt werden müssen. Die so gefertigten Produkte weisen ein vergleichsweise hohes Gewicht auf.

Der Erfindung liegt die Aufgabe zugrunde, ein Formteil bereitzustellen, welches ein in Haptik und Optik hochwertiges Erscheinungsbild und gleichzeitig eine sehr gute Gebrauchstauglichkeit aufweist, sowie ein zugehöriges Herstellverfahren bereitzustellen.

Diese Aufgabe ist durch das im Anspruch 1 bestimmte Formteil und durch das im nebengeordneten Anspruch bestimmte Herstellverfahren gelöst. Besondere Ausführungsarten der Erfindung sind in den Unteransprüchen bestimmt.

Das erfindungsgemässe Formteil ist nach dem Abformen auf mindestens einer Sichtseite des Formteils derart bearbeitet, dass das Formteil auf der Sichtseite eine taktil und/oder visuell wahrnehmbare Welligkeit aufweist, und auf der Sichtseite Füllstoffpartikel bis an die Oberfläche der Sichtseite ragen und dadurch einen Teil der Oberfläche der Sichtseite bilden, wobei die Füllstoffpartikel planarisiert sind, und wobei der Abstand zweier Wellenberge mehr als 2 mm beträgt.

In einem Zwischenbereich zwischen zwei die Oberfläche der Sichtseite bindenden Füllstoffpartikeln ist die Oberfläche der Sichtseite dagegen durch das Bindemittel gebildet.

Dadurch, dass die Füllstoffpartikel einen Teil der Oberfläche der Sichtseite bilden, sind die Gebrauchseigenschaften des Formteils weiter verbessert. Insbesondere ist die Abriebfestigkeit erhöht, da die Füllstoffpartikel eine größere Mohshärte aufweisen können als das Bindemittel.

Auch die optische Qualität der erfindungsgemäßen Formteile ist verbessert, da durch das Hervortreten der Füllstoffpartikel bis an die Oberfläche der Sichtseite nicht nur der farbliche Kontrast zwischen den Füllstoffpartikeln und dem angrenzenden Bindemittel erhöht ist, was dem Formteil auf der Sichtseite ein natursteinähnliches Aussehen gibt, sondern weil durch das Bearbeiten der Sichtseite die sichtbare Fläche der Füllstoffpartikel, die beim Bearbeiten planarisiert werden, vergrößert ist, was dem Formteil ebenfalls ein natursteinähnliches Aussehen gibt.

In einer Ausführungsart besteht die sichtbare Oberfläche des erfindungsgemäßen bearbeiteten Formteils zu mindestens 30 %, vorzugsweise mehr als 45% und insbesondere mehr als 60% (Flächenanteil) aus mineralischem Füllstoff.

Gemäss der Erfindung weist die Oberfläche der Sichtseite durch die nach dem Abformen erfolgte Bearbeitung eine sichtbare und/oder fühlbare Unebenheit auf. Der Abstand zweier benachbarter lokaler Maxima oder Erhebungen der Oberfläche beträgt mehr als 2 mm. Dadurch ist eine Haptik und/oder Optik erreichbar, die sehr ansprechend und hochwertig ist.

Das Bearbeiten der Oberfläche der Sichtseite kann mechanisch erfolgen, beispielsweise durch Sandstrahlen, Bürsten, Schleifen oder dergleichen. Alternativ oder ergänzend kann die Bearbeitung auch chemisch oder jedenfalls chemisch unterstützt erfolgen, beispielsweise indem das Bindemittel im Bereich zwischen benachbarten Füllstoffpartikeln angelöst wird.

In einer Ausführungsart weisen die sichtbaren und/oder fühlbaren Unebenheiten ein Aspektverhältnis (Verhältnis von Breite zu Tiefe) von mindestens 1 auf, vorzugsweise mindestens 2 und insbesondere größer als 3. Dadurch ist die Reinigungsfähigkeit verbessert, weil in den breiten flachen Tälern der Schmutz keinen dauerhaften Halt findet und durch einfache Reinigung leicht entfernt werden kann.

In einer Ausführungsart beträgt die Absenkung der Oberfläche mehr als 2 µm, insbesondere mehr als 5 µm und vorzugsweise zwischen 10 µm und 100 µm.

In einer Ausführungsart weist die Oberfläche auch tiefere Absenkungen oder Vertiefungen auf, deren Tiefe mehr als das Zweifache, insbesondere mehr als das Dreifache und vorzugsweise mehr als das Vierfache der Tiefe der angrenzenden, weniger tiefen Absenkungen beträgt. Diese tieferen Absenkungen oder Vertiefungen können eine Tiefe zwischen 20 µm und 500 µm aufweisen, insbesondere zwischen 50 µm und 300 µm und vorzugsweise zwischen 100 µm und 200 µm. Die Absenkungen oder Vertiefungen können unregelmäßig über die Oberfläche verteilt sein.
Der Abstand benachbarter tieferer Absenkungen oder Vertiefungen beträgt in mehr als 35 % der Fälle, insbesondere in mehr als 50 % der Fälle und vorzugsweise in mehr als 65 % der Fälle mehr als 5 mm, insbesondere mehr als 15 mm und vorzugsweise mehr als 25 mm.

In einer Ausführungsart beträgt der Abstand zwischen zwei benachbarten Füllstoffpartikeln mit einer Größe von mindestens 1,0 mm an der Oberfläche der Sichtseite für mindestens 80 % dieser Füllstoffpartikel mehr als 0,1 mm, vorzugsweise mehr als 0,2 mm und insbesondere mehr als 0,3 mm.

In einer Ausführungsart beträgt der Abstand zwischen zwei benachbarten Füllstoffpartikeln einer Größe von weniger als 3,5mm an der Oberfläche der Sichtseite für mindestens 80 % der Füllstoffpartikel weniger als 3 mm, vorzugsweise weniger als 2 mm und insbesondere weniger als 1,5 mm.
Je geringer der Abstand zwei benachbarter Füllstoffpartikel ist, desto besser ist die Abriebfestigkeit.

Durch eine Anpassung des Abstandes der Füllstoffpartikel und/oder der Größe der Füllstoffpartikel kann insbesondere auch das optische Erscheinungsbild der Sichtseite des Formteils in weiten Bereichen variiert werden, insbesondere können verschiedene Natursteinarten nachgebildet werden. Hierzu kann mindestens ein Teil der Füllstoffpartikel eine von der Farbe des Bindemittels abweichende Farbe aufweisen. Es können auch Füllstoffpartikel von unterschiedlicher Farbe eingesetzt werden. Die Farbe kann von dem Werkstoff oder Mineral des Füllstoffpartikels bestimmt sein oder die Füllstoffpartikel können eine Farbbeschichtung aufweisen.

In einer Ausführungsart ist das Bindemittel mindestens teilweise ein ausgehärtetes Acrylharz, insbesondere Polymethylmethacrylat (PMMA). Durch die Verwendung von Acrylharz sind sehr gute Gebrauchseigenschaften realisierbar, insbesondere eine für Bindemittel verhältnismäßig harte und kratzfeste Oberfläche und darüber hinaus eine hohe Gestaltungsfreiheit hinsichtlich der ästhetischen Farberscheinung.

Der Anteil von PMMA am Bindemittel kann mindestens 50 % betragen.
In einer Ausführungsart besteht das Bindemittel zu mindestens 90 % aus PMMA. Das Bindemittel kann im ausgehärteten Zustand farblos und transparent sein. In einer Ausführungsart sind dem Bindemittel Farbpigmente zugesetzt, so dass das ausgehärtete Bindemittel unabhängig von dem partikelförmigen Füllstoff eine Eigenfarbe aufweist.

Das Abformen erfolgt vorzugsweise durch einen Gießformvorgang, durch den insbesondere eine weitgehend homogene Verteilung der Füllstoffpartikel in dem Bindemittel erreichbar ist bei gleichzeitig verhältnismäßig hoher Packungsdichte der Füllstoffpartikel in dem hergestellten Formteil.

In einer Ausführungsart weisen die Füllstoffpartikel eine gegenüber dem Bindemittel höhere Mohshärte auf. Dadurch können die mechanischen Eigenschaften, insbesondere die Abriebfestigkeit, des hergestellten Formteils durch die Wahl der Füllstoffpartikel bestimmt oder jedenfalls weitgehend beeinflusst werden. In einer Ausführungsart weisen mehr als 50 %, vorzugsweise mehr als 75 %, der Füllstoffpartikel eine Mohshärte von mindestens 6 auf, insbesondere eine Mohshärte von mindestens 7.
Es kommen grundsätzlich alle Füllstoffe in Betracht, die eine entsprechend hohe Mohshärte aufweisen. In einer Ausführungsart besteht mindestens ein Teil der Füllstoffpartikel, vorzugsweise alle Füllstoffpartikel, aus Siliciumdioxid.

In einer Ausführungsart beträgt der Anteil des Füllstoffes mehr als 50 und weniger als 85 Gew.%, bezogen auf die Masse des Formteils, vorzugsweise zwischen 60 und 82 Gew.%, weiter vorzugsweise weniger als 80 Gew.%.

In einer Ausführungsart beträgt der Füllstoffanteil weniger als 78 Gew.%. In einer Ausführungsart weisen mindestens 85 Gew.% des Füllstoffes, bezogen auf die Masse des gesamten Füllstoffes, eine Partikelgröße zwischen 0,05 und 5 mm auf, insbesondere weisen mindestens 20 Gew.% eine Partikelgröße zwischen 1 und 3 mm auf. In einer Ausführungsart beträgt der Gewichtsanteil der Füllstoffpartikel mit einer Größe von mehr als 2 mm mehr als 10%, insbesondere mehr als 15% und vorzugsweise mehr als 20%, bezogen auf die Masse des gesamten Füllstoffes. Der Anteil mit einer Größe von mehr als 2,5 mm kann mehr als 5 %, insbesondere mehr als 10% und vorzugsweise mehr als 15% betragen, bezogen auf die Masse des gesamten Füllstoffes.

In einer Ausführungsart weist das Formteil neben dem partikelförmigen Füllstoff mehr als 15 und weniger als 50 Gew.% des ausgehärteten Bindemittels auf, bezogen auf die Masse des Formteils, insbesondere mehr als 18 Gew.% und weniger als 40 Gew.%, und vorzugsweise mehr als 20 und weniger als 30 Gew.%.

Außer dem partikelförmigen Füllstoff mit einer Partikelgröße von mindestens 0,1 mm kann das Formteil auch noch mehlförmigen Füllstoff mit einer Partikelgröße von weniger als 0,1 mm aufweisen, insbesondere weniger als 0,07 mm, und zwar mit einem Anteil von mehr als 3 Gew.%, insbesondere mehr als 5 Gew.% und vorzugsweise mehr als 7 Gew.%, bezogen auf die Masse des Formteils.

In einer Ausführungsart weist das Formteil eine von einer Plattenform abweichende dreidimensionale Form auf, insbesondere weist das Formteil mindestens einen beckenförmigen Abschnitt auf. Gerade bei derartigen dreidimensionalen Formteilen ist eine an das Abformen anschließende vollflächige Bearbeitung der Oberfläche nicht bekannt. In einer Ausführungsart beträgt die Wandstärke des Formteils mindestens abschnittsweise, vorzugsweise ganzflächig, weniger als 3 cm, insbesondere weniger als 2 cm und vorzugsweise zwischen 0,5 und 1,5 cm.

Die Erfindung betrifft auch ein Verfahren gemäss Patentanspruch 14.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Schnitt durch ein erfindungsgemäßes Formteil,
- Fig. 2: zeigt einen vergrößerten Ausschnitt des Formteils der Fig. 1,
- Fig. 3: zeigt einen weiter vergrößerten Ausschnitt des Formteils der Fig. 1,
- Fig. 4: zeigt einen vergrößerten Schnitt durch ein Probenstück eines erfindungsgemäßen Formteils direkt nach dem Entformen und vor dem Bearbeiten der Sichtseite,
- Fig. 5: zeigt einen vergrößerten Schnitt durch ein Probenstück eines erfindungsgemäßen Formteils nach dem Bearbeiten der Sichtseite,
- Figur 6: zeigt ein Oberflächenprofil eines Probenstücks eines Formteils aus Naturstein,
- Fig. 7: zeigt ein Oberflächenprofil eines Probenstücks eines erfindungsgemäßen Formteils CRISTASTONE, und
- Fig. 8: zeigt ein Oberflächenprofil eines Probenstücks eines gemäß EP 0 361 101 B2 hergestellten Formteils CRIS-TALITE,

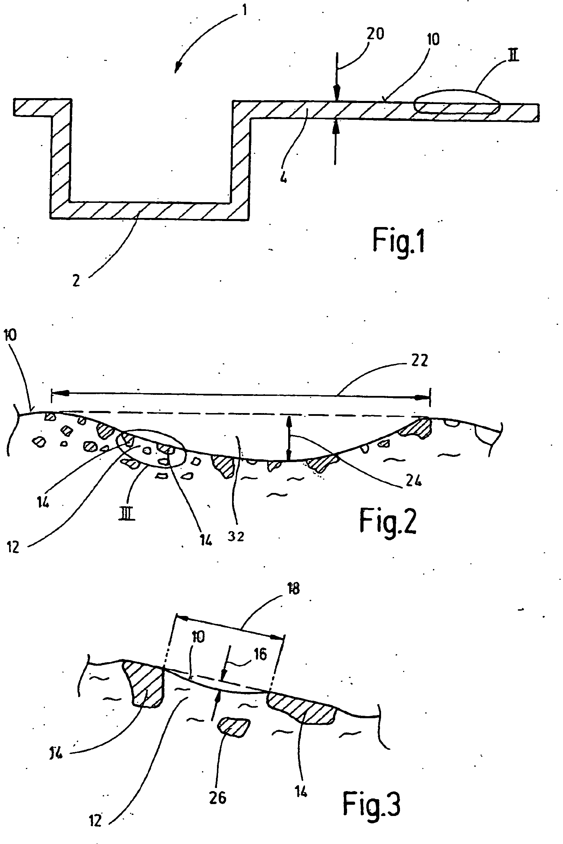

Die Fig. 1 zeigt einen Schnitt durch ein erfindungsgemäßes Formteil 1, bei dem es sich um ein Küchenspülbecken handelt, insbesondere um ein Einbauspülbecken, mit einem beckenförmigen Abschnitt 2 und einer einstückig damit ausgebildeten Abtropffläche 4. Das Formteil 1 ist aus einem Kompositwerkstoff hergestellt mit einem ausgehärteten polymeren Bindemittel 12 (Fig. 2) und darin eingelagerten Füllstoffpartikeln 14. Die Herstellung erfolgt zunächst durch Abformen einer vorzugsweise mehrfach verwendbaren Form und danach erfolgtem Bearbeiten einer Sichtseite 10 des Formteils 1. Die Wandstärke 20 des Formteils 1 beträgt im Ausführungsbeispiel zwischen 5 und 15 mm.

Eine bevorzugte Zusammensetzung des Formteils 1 besteht aus 60 bis 80 Gew.% mineralischem Füllstoff, wobei 80 Gew.% der Füllstoffpartikel 14 eine Partikelgröße zwischen 0,05 und 3 mm aufweisen, und 20 bis 40 % einer Lösung aus Polymethylmethacrylat in Methylmethacrylat als Bindemittel 12, wobei der Anteil des Polymethylmethacrylat an dieser Lösung zwischen 15 und 30 % beträgt. Als Füllstoffpartikel 14 eignen sich grundsätzlich alle natürlichen und synthetischen Mineralien, sowie Glas, Keramiken u. ä.. Soweit durch die Füllstoffpartikel 14 die Härte des Formteils 1 erhöht werden soll, sind Füllstoffpartikel 14 vorzuziehen, deren Härte größer ist als die des Bindemittels 12.

Weiterhin kann noch ein Initiator in einer Menge zwischen 0,5 und 2 Gew.%, bezogen auf das Bindemittelharz, zugesetzt werden sowie 0,1 bis 1 % eines Haftvermittlers, der auch schon als Beschichtung auf die Füllstoffpartikel 14 vorhanden sein kann. Weiterhin kann ein Quervernetzungsmittels zugesetzt werden.

Die Fig. 2 zeigt einen Ausschnitt des Formteils 1 der Fig. 1 im Bereich der Oberfläche 10 der Abtropffläche 4. Die Füllstoffpartikel 14 weisen in diesem Ausführungsbeispiel eine vergleichsweise geringe Grösse von weniger als 0,5 mm auf. Dargestellt ist eine Unebenheit oder Welligkeit der Oberfläche 10 der Sichtseite, die durch eine nach dem Abformen erfolgte Bearbeitung entstanden ist. Der Abstand 22 zweier benachbarter lokaler Maxima der Oberfläche 10 beträgt mehr als 2 mm und im Ausführungsbeispiel 5 mm. Die Tiefe 24 der sich zwischen zwei lokalen Maxima oder Wellenbergen 28, 30 erstreckenden Vertiefung 32 beträgt zwischen 0,1 und 0,2 mm. Dieser vergleichsweise makroskopischen Unebenheit der Oberfläche 10 ist eine demgegenüber vergleichsweise mikroskopische Unebenheit der Oberfläche 10 überlagert.

Die Fig. 3 zeigt einen weiter vergrößerten Ausschnitt III des Formteils 1 der Fig. 1. Die Füllstoffpartikel 14 sind an ihrer die Oberfläche 10 der Sichtseite bildenden Außenfläche planarisiert. In einem Zwischenbereich zwischen zwei die Oberfläche 10 der Sichtseite bildenden Füllstoffpartikeln 14 ist die Oberfläche 10 durch das Bindemittel 12 gebildet. Im Ausführungsbeispiel ist die Oberfläche 10 im Zwischenbereich gegenüber den angrenzenden Füllstoffpartikeln 14 abgesenkt. Vorzugsweise ist in dem Zwischenbereich die durch das Bindemittel 12 gebildete Oberfläche 10 konkav geformt.

In dem Zwischenbereich sind unterhalb der Oberfläche 10 weitere Füllstoffpartikel 26, die aber nicht bis an die Oberfläche 10 ragen und die auch nicht durch das Bearbeiten planarisiert wurden, sondern ihre ursprüngliche, vorzugsweise ungebrochene Grundform aufweisen.

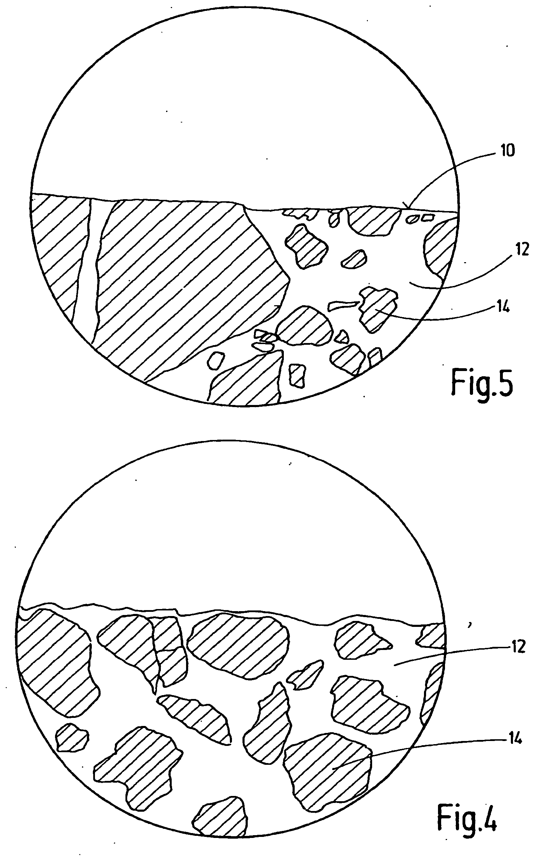

Die Fig. 4 zeigt einen vergrößerten Schnitt durch ein Probenstück eines erfindungsgemäßen Formteils direkt nach dem Entformen und vor dem Bearbeiten der Sichtseite. Die Füllstoffpartikel 14 weisen allseitig eine unregelmäßige Form auf und sind vollständig vom Bindemittel 12 umgeben. Das Bindemittel 12 bildet zu diesem Zeitpunkt die Oberfläche 10 des Formteils. In der Fig. 4 ist dabei ein vergrößerter Schnitt eines Probenstücks eines Formteils dargestellt, wie es auch nach der EP 0 361 101 B2 herstellbar ist und von der Anmelderin mit CRISTALITE gekennzeichnet wird.

Die Fig. 5 zeigt dagegen einen vergrößerten Schnitt eines Probenstücks eines erfindungsgemäßen Formteils, das von der Anmelderin mit CRISTASTONE bezeichnet wird. Die teilweise größeren Füllstoffpartikel 14 ragen bis an die Oberfläche 10 und sind an der die Sichtseite des Formteils 1 bildenden Oberfläche 10 planarisiert.

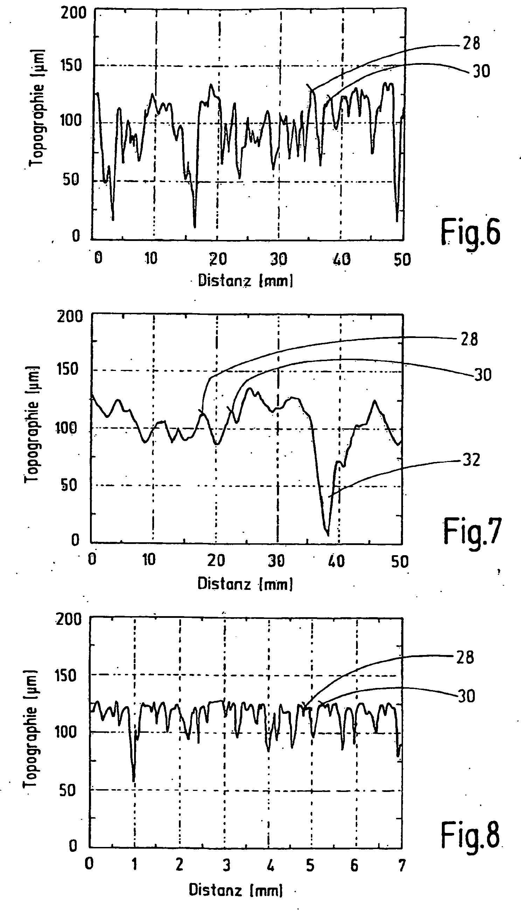

Die Figur 6 zeigt ein Oberflächenprofil eines Probenstücks eines Formteils aus gebürstetem Naturstein, die Fig. 7 zeigt ein Oberflächenprofil eines Probenstücks eines erfindungsgemäßen Formteils CRISTASTONE, und die Fig. 8 zeigt ein Oberflächenprofil eines Probenstücks eines gemäß EP 0 361 101 B2 hergestellten Formteils CRISTALITE; die Fig. 6 und 7 zeigen ein Oberflächenprofil über eine Messstrecke von 50 mm, die Fig. 8 zeigt ein Oberflächenprofil über eine Messstrecke von 7 mm.

Die Welligkeit im Oberflächenprofil des erfindungsgemässen Formteils CRISTASTONE ist insbesondere im Vergleich zum Oberflächenprofil CRISTALITE erkennbar. Der Abstand benachbarter Wellenberge 28, 30, der auch als "Wellenlänge" der Welligkeit bezeichnet werden kann, beträgt beim erfindungsgemässen Formteil mehr als 2 mm, und vorzugsweise mehr als 3 mm. Demgegenüber ist der Abstand benachbarter Wellenberge 28, 30 sowohl beim gebürsteten Naturstein (Fig. 6) als auch bei der Vergleichsprobe der Fig. 8 geringer. Die Tiefe eines zwischen zwei benachbarten Wellenbergen 28, 30 angeordneten Wellentals, die auch als "Amplitude" der Welligkeit bezeichnet werden kann, beträgt beim erfindungsgemässen Formteil weniger als 50 µm, insbesondere weniger als 35 µm, wohingegen die Tiefe der Wellentäler der Vergleichsprobe der Fig. 8 schon etwas grösser ist und insbesondere beim Naturstein (Fig. 6) grösser ist.

Das erfindungsgemäße Formteil weist außerdem im Abstand von mehreren Millimetern Vertiefungen 32 auf, deren Tiefe größer ist als die Tiefe der Wellentäler zwischen benachbarten Wellenbergen 28, 30, insbesondere mehr als 50 µm beträgt, vorzugsweise mehr als 75 µm. In mehr als 50 % der Fälle weisen benachbarte Vertiefungen 32 einen Abstand von mehr als 15 mm auf, insbesondere mehr als 20 mm und vorzugsweise mehr als 25 mm.

Zur Charakterisierung der Material- und Oberflächeneigenschaften des erfindungsgemäßen Formteils und Vergleichsmaterialien wurden die folgenden Testverfahren angewendet; dabei wurde zum einen ein Formteil aus gebürstetem Naturstein als Vergleichsstück verwendet und zum anderen ein nach der EP 0 361 101 B2 hergestelltes und mit CRISTALITE gekennzeichnetes Formteil. Das erfindungsgemäße Formteil ist mit CRISTASTONE gekennzeichnet.

### Schlagzähigkeit:

Die Schlagzähigkeit wird in Anlehnung an die DIN EN ISO 179 mit einem FRANK Pendelschlagwerk mit 0,5 J-Pendel bestimmt. Es wurden zehn Materialproben vermessen und gemittelt.

### Ergebnis Schlagzähigkeit [mJ/mm²]:

| Naturstein | Cristastone | Cristalite |
|---|---|---|
| 1,12 | 2,74 | 3,02 |

### Abriebbeständigkeit

Die Abriebbeständigkeit wird in Anlehnung an die DIN EN 13310 mit einer Prüfmaschine wie in ISO 9352 angegeben nach 100 Umdrehungen bestimmt.

Ergebnis Abrieb [mg/100U]:

| Naturstein | Cristastone | Cristalite |
|---|---|---|
| 12,7 | 4,1 | 9 |

### Anschmutzung:

Zum Simulieren der im Haushaltsbereich vorkommenden, sehr unterschiedlichen Fleckmittel wird ein synthetischer Standard-Testschmutz IPP 2 der Fa. wfk Testgewebe GmbH verwendet. Dieser Testschmutz besteht aus einer Suspension von Ruß in einem Kohlenwasserstoffgemisch. Zur Bestimmung der Reinigungseigenschaften wird ein Musterstück definiert verschmutzt und nach erfolgter definierter Abreinigung mit Wasser und Reinigungssuspension unter definierten Bedingungen der auf der Oberfläche verbleibende Rußanteil photoelektrisch und visuell erfasst.

### Ergebnisse Anschmutzungstest:

| | Farbmessung [DE] | Visuelle Beurteilung |
|---|---|---|
| Naturstein | 17,2 | Sehr deutlicher, eingedrungener Fleck |
| Cristastone | 2,7 | Kaum sichtbarer Rückstand |
| Cristalite | 4,8 | Leichter Rückstand |

### Fleckfestigkeit

Die Fleckfestigkeit wird in Anlehnung an die DIN EN 13310 und DIN EN 438 T2 mit den Fleckmitteln gemäß Ergebnistabelle durchgeführt

### Ergebnistabelle Fleckfestigkeit i.A. DIN EN 438 T2:

| Fleckbildende Substanz | Gruppe | Einwirkdauer | Ergebnis Naturstein | Ergebnis Cristastone | Ergebnis Cristalite |
|---|---|---|---|---|---|
| Alkoholische Getränke | 1 | 16h | Grad 3 | Grad 5 | Grad 4 |
| Gemüsesaft | 1 | 16h | Grad 4 | Grad 5 | Grad 5 |
| Pflanzliches Öl | 1 | 16h | Grad 4 | Grad 5 | Grad 5 |
| Senf | 1 | 16h | Grad 3 | Grad 5 | Grad 5 |
| Kaffee | 2 | 16h | Grad 4 | Grad 5 | Grad 5 |
| Tee | 2 | 16h | Grad 4 | Grad 5 | Grad 5 |
| Weinessig | 2 | 16h | Grad 3 | Grad 5 | Grad 5 |
| Waschbeständige Tinten | 2 | 16h | Grad 4 | Grad 5 | Grad 5 |
| Natriumhydroxid 25%ige Lsg | 3 | 10min | Grad 5 | Grad 5 | Grad 5 |
| Essigessenz | 3 | 10min | Grad 5 | Grad 5 | Grad 5 |
| Reinigungsmittel Auf HCl-Basis 3% | 3 | 10min | Grad 5 | Grad 5 | Grad 5 |
| Mercuchrom | 3 | 10min | Grad 2 | Grad 5 | Grad 5 |
| Schuhcreme | 3 | 10min | Grad 4 | Grad 5 | Grad 5 |

Dabei bedeuten:
Grad 5: keine sichtbare Veränderung
Grad 4: leichte Veränderung..
Grad 3: mäßige Veränderung ...
Grad 2: deutliche Veränderung...
Grad 1: Oberflächenschädigung/Blasenbildung

### Ergebnistabelle Fleckfestigkeit i.A. DIN EN 13310:

| Fleckbildende Substanz | Einwirkdauer | Ergebnis Naturstein | Ergebnis Cristastone | Ergebnis Cristalite |
|---|---|---|---|---|
| Essigsäure 10%vol | 16h | Stufe 2 | Stufe 1 | Stufe 1 |
| NaOH 5%w | 16h | Leicht matt | Stufe 1 | Stufe 1 |
| Ethanol 70%vol | 16h | Stufe 1 | Stufe 1 | Stufe 1 |
| Natriumpercarbonat 15-30% aktive Komponente | 16h | Stufe 1 | Stufe 1 | Stufe 1 |
| Methylenblau 1%w | 16h | Starker Fleck | Stufe 1 | Stufe 2 |
| Natriumchlorid 170g/l | 16h | Stufe 2 | Stufe 1 | Stufe 1 |

Dabei bedeuten:
Stufe 1: Abspülen mit Wasser
Stufe 2: Reinigung mit Schwamm, Wasser
Stufe 3: Reinigung mit Schwamm und Aluminiumoxyd-Suspension

## Patentansprüche

1. Formteil (1), wie beispielsweise Küchenspülbecken, Waschbecken, Arbeitsplatte oder dergleichen, hergestellt aus einem Kompositwerkstoff mit einem ausgehärteten polymeren Bindemittel (12) und mehr als 50 Gew% und weniger als 85 Gew%, bezogen auf die Masse der Formteils (1), darin eingelagerten Füllstoffpartikeln (14) durch Abformen einer vorzugsweise mehrfach verwendbaren Form, dadurch gekenntzeichnet, dass das Formteil (1) nach dem Abformen auf mindestens einer Sichtseite des Formteils (1) mechanisch und/oder chemisch derart bearbeitet ist, dass durch die Bearbeitung auf der Sichtseite Füllstoffpartikel (14) bis an eine Oberfläche der Sichtseite ragen und dadurch einen Teil der Oberfläche (10) der Sichtseite bilden, wobei die Füllstoffpartikel (14) in ihrem die Oberfläche (10) der Sichtseite bildenden Bereich planarisiert sind, dass in einem Zwischenbereich zwischen zwei die Oberfläche (10) der Sichtseite bildenden Füllstoffpartikeln (14) die Oberfläche (10) der Sichtseite durch das Bindemittel (12) gebildet ist, und dass das Formteil (1) auf der Sichtseite durch die Bearbeitung eine taktil und/oder visuell wahrnehmbare Welligkeit aufweist, wobei der Abstand zweier benachbarter Wellenberge mehr als 2 mm beträgt.

2. Formteil (1) nach Anspruch 1 oder 2, **dadurch gekennzeichnet, dass** die die Oberfläche (10) bildenden Füllstoffpartikel (14) mindestens einen Flächenanteil von 40%, vorzugsweise mindestens 50% und insbesondere mehr als 60% haben.

3. Formteil (1) nach einem der vorangehenden Ansprüche, **dadurch gekennzeichnet, dass** die Welligkeit der Oberfläche (10) unregelmäßig ist.

4. Formteil (1) nach einem der vorangehenden Ansprüche, **dadurch gekennzeichnet, dass** die Welligkeit durch ein Verhältnis von Amplitude zu Wellenlänge von kleiner 0,1, vorzugsweise kleiner 0,05 und insbesondere kleiner 0,025 gekennzeichnet ist.

5. Formteil (1) nach einem der vorangehenden Ansprüche, **dadurch gekennzeichnet, dass** an der Oberfläche (10) der Sichtseite für mindestens 80% der Füllstoffpartikel (14) mit einer Größe von mindestens 1,0 mm der Abstand zwischen zwei benachbarten Füllstoffpartikeln (14) mehr als 0,1 mm, vorzugsweise mehr als 0,2 mm und insbesondere mehr als 0,3 mm beträgt.

6. Formteil (1) nach einem der vorangehenden Ansprüche, **dadurch gekennzeichnet, dass** an der Oberfläche (10) der Sichtseite für mindestens 80% der Füllstoffpartikel (14) mit einer Größe vom weniger als 3,5 mm der Abstand zwischen zwei benachbarten Füllstoffpartikeln (14) weniger als 3 mm, vorzugsweise weniger als 2 mm und insbesondere weniger als 1,5 mm beträgt.

7. Formteil (1) nach einem der vorangehenden Ansprüche, **dadurch gekennzeichnet, dass** das Formteil (1) durch Gießformen hergestellt ist und die Bearbeitung der Sichtseite nach dem Gießformen erfolgt ist.

8. Formteil (1) nach einem der vorangehenden Ansprüche, **dadurch gekennzeichnet, dass** die Oberfläche (10) der Sichtseite durch Sandstrahlen, Schleifen oder Bürsten mechanisch bearbeitet ist.

9. Formteil (1) nach einem der vorangegangenen Ansprüche, **dadurch gekennzeichnet, dass** die Oberfläche (10) der Sichtseite durch Lösen oder Ätzen chemisch bearbeitet ist.

10. Formteil (1) nach einem der vorangehenden Ansprüche, **dadurch gekennzeichnet, dass** die Füllstoffpartikel (14) eine gegenüber dem Bindemittel (12) höhere Mohshärte aufweisen.

11. Formteil (1) nach einem der vorangehenden Ansprüche, **dadurch gekennzeichnet, dass** mehr als 50%, vorzugsweise mehr als 75% der Füllstoffpartikel (14) eine Mohshärte von mindestens 6 aufweisen, insbesondere eine Mohshärte von mindestens 7 aufweisen, und vorzugsweise aus Siliciumdioxid bestehen.

12. Formteil (1) nach einem der vorangehenden Ansprüche, **dadurch gekennzeichnet, dass** das Formteil (1) eine von einer Plattenform abweichende dreidimensionale Form aufweist, insbesondere mindestens einen beckenförmigen Abschnitt (2) aufweist.

13. Formteil (1) nach einem der vorangehenden Ansprüche, **dadurch gekennzeichnet, dass** die Wandstärke (20) des Formteils (1) mindestens abschnittsweise, vorzugsweise ganzflächig, weniger als 3 cm beträgt, insbesondere weniger als 2 cm und vorzugsweise weniger als 1,5 cm.

14. Verfahren zum Herstellen eines Formteils (1) wie beispielsweise eines Küchenspülbeckens, eines Waschbeckens, einer Arbeitsplatte oder dergleichen, wobei das Formteil (1) aus einem Kompositwerkstoff mit einem ausgehärteten polymeren Bindemittel (12) und mehr als 50 Gew% und weniger als 85 Gew%, bezogen auf die Masse des Formteils (1), darin eingelagerten Füllstoffpartikeln (14) durch Abformen einer vorzugsweise mehrfach verwendbaren Form hergestellt wird, und wobei das Formteil (1) nach dem Abformen auf mindestens einer Sichtseite mechanisch und/oder chemisch derart bearbeitet wird, dass durch die Bearbeitung auf der Sichtseite Füllstoffpartikel (14) bis an eine Oberfläche (10) der Sichtseite ragen und dadurch einen Teil der Oberfläche (10) der Sichtseite bilden und planarisiert werden, dass in einem Zwischenbereich zwischen zwei die Oberfläche (10) der Sichtseite bildenden Füllstoffpartikeln (14) die Oberfläche (10) der Sichtseite durch das Bindemittel (12) gebildet ist, und dass das Formteil (1) auf der Sichtseite durch die Bearbeitung eine taktil und/oder visuell wahrnehmbare Welligkeit aufweist, wobei der Abstand zweier benachbarter Wellenberge mehr als 2 mm beträgt.

15. Verfahren nach Anspruch 14, **dadurch gekennzeichnet, dass** das Abformen ein Gießformverfahren ist.

## Claims

1. A moulded part (1), such as for example a kitchen sink, a washbasin, a worktop or the like, produced from a composite material with a hardened polymer bonding medium (12) and more than 50 % by weight and less than 85 % by weight in relation to the mass of the moulded part (1) of filler particles (14) incorporated into the latter by casting a mould which can preferably be used a number of times, **characterised in that** after casting the moulded part (1) is machined mechanically and/or chemically on at least one visible side of the moulded part (1) such that, due to the machining, on the visible side filler particles (14) project to a surface of the visible side and thus form part of the surface (10) of the visible side, wherein the filler particles (14) are planarised in their region forming the surface (10) of the visible side, that in an intermediate area between two filler particles (14) forming the surface (10) of the visible side the surface (10) of the visible side is formed by the bonding medium (12), and that, due to the machining, the moulded part (1) has on the visible side a palpably and/or visually observable corrugation, wherein the distance between two adjacent wave elevations is more than 2 mm.

2. The moulded part (1) according to Claim 1, **characterised in that** the filler particles (14) forming the surface (10) have a surface proportion of at least 40 %, preferably at least 50 % and in particular more than 60 %.

3. The moulded part (1) according to either of the preceding claims, **characterised in that** the corrugation of the surface (10) is irregular.

4. The moulded part (1) according to any of the preceding claims, **characterised in that** the corrugation is **characterised by** a ratio of amplitude to wavelength that is smaller than 0.1, preferably smaller than 0.05 and in particular smaller than 0.025.

5. The moulded part (1) according to any of the preceding claims, **characterised in that** for at least 80 % of the filler particles (14) with a size of at least 1.0 mm on the surface (10) of the visible side the distance between two adjacent filler particles (14) is more than 0.1 mm, preferably more than 0.2 mm and in particular more than 0.3 mm.

6. The moulded part (1) according to any of the preceding claims, **characterised in that** for at least 80 % of the filler particles (14) with a size of less than 3.5 mm on the surface (10) of the visible side the distance between two adjacent filler particles (14) is less than 3 mm, preferably less than 2 mm and in particular less than 1.5 mm.

7. The moulded part (1) according to any of the preceding claims, **characterised in that** the moulded part (1) is produced by cast moulding and the machining of the visible side takes place after the cast moulding.

8. The moulded part (1) according to any of the preceding claims, **characterised in that** the surface (10) of the visible side is mechanically processed by sandblasting, grinding or brushing.

9. The moulded part (1) according to any of the preceding claims, **characterised in that** the surface (10) of the visible side is chemically processed by dissolving or etching.

10. The moulded part (1) according to any of the preceding claims, **characterised in that** the filler particles (14) have a higher Mohs hardness with respect to the bonding medium (12).

11. The moulded part (1) according to any of the preceding claims, **characterised in that** more than 50 %, preferably more than 75 % of the filler particles (14) have a Mohs hardness of at least 6, in particular a Mohs hardness of at least 7, and are preferably made of silicon dioxide.

12. The moulded part (1) according to any of the preceding claims, **characterised in that** the moulded part (1) has a three-dimensional form different from a sheet form, and in particular has at least one basin-shaped section (2).

13. The moulded part (1) according to any of the preceding claims, **characterised in that** the wall thickness (20) of the moulded part (1) is at least in sections, preferably over the whole surface, less than 3 cm, in particular less than 2 cm and preferably less than 1.5 cm.

14. A method for producing a moulded part (1), such as for example a kitchen sink, a washbasin, a worktop or the like, the moulded part (1) being produced from a composite material with a hardened polymer bonding medium (12) and more than 50 % by weight and less than 85 % by weight in relation to the mass of the moulded part (1) of filler particles (14) incorporated into the latter by casting a mould which can preferably be used a number of times, and after casting the moulded part (1) being machined mechanically and/or chemically on at least one visible side such that, due to the machining, on the visible side filler particles (14) project to a surface (10) of the visible side and thus form part of the surface (10) of the visible side and are planarised, that in an intermediate area between two filler particles (14) forming the surface (10) of the visible side the surface (10) of the visible side is formed by the bonding medium (12), and that, due to the machining, the moulded part (1) has on the visible side a palpably and/or visually observable corrugation wherein the distance between two adjacent wave elevations is more than 2 mm.

15. The method according to Claim 14, **characterised in that** the casting is a cast moulding method.

## Revendications

1. Pièce (1) moulée, comme par exemple évier de cuisine, lavabo, plaque de travail ou analogue, fabriquée en un matériau composite, ayant un liant (12) polymère durci et plus de 50% en poids et moins de 85% en poids rapporté à la masse de la pièce (1) moulée de particules (14) de charge, qui y sont insérées, par moulage dans un moule utilisable de préférence plusieurs fois, **caractérisée en ce que** la pièce (1) moulée est, après le moulage, traitée mécaniquement et/ou chimiquement, au moins sur un côté visible de la pièce (1) moulée, de manière à ce que, par le traitement sur le côté visible, des particules (14) de charge vont jusqu'à une surface du côté visible et forment ainsi une partie de la surface (10) du côté visible, les particules de charge (14) étant planarisées dans leur zone formant la surface (10) du côté visible, **en ce que,** dans une région intermédiaire comprise entre deux particules (14) de charge formant la surface visible, la surface (10) du côté visible est formée par le liant (12) et **en ce que** la pièce (1) moulée a, du côté visible, par le traitement, une ondulation perceptible au toucher et/ou visuellement, la distance entre deux sommets d'ondulation voisins étant supérieure à 2mm.

2. Pièce (1) moulée suivant la revendication 1, **caractérisée en ce que** les particules (14) de charge formant la surface (10) représentent une proportion de surface de 40%, de préférence d'au moins 50% et notamment de plus de 60%.

3. Pièce (1) moulée suivant l'une des revendications précédentes, **caractérisée en ce que** l'ondulation de la surface (10) est irrégulière.

4. Pièce (1) moulée suivant l'une des revendications précédentes, **caractérisée en ce que** l'ondulation se **caractérise par** un rapport de l'amplitude à la longueur d'onde plus petit que 0,1, de préférence plus petit que 0,05 et notamment plus petit que 0,025.

5. Pièce (1) moulée suivant l'une des revendications précédentes, **caractérisée en ce que,** à la surface (10) du côté visible, pour au moins 80% des particules (14) de charge ayant une dimension d'au moins 1,0 mm, la distance entre deux particules (14) de charge voisines est supérieure à 0,1 mm, de préférence supérieure à 0,2 mm et notamment supérieure à 0,3 mm.

6. Pièce (1) moulée suivant l'une des revendications précédentes, **caractérisée en ce que,** à la surface (10) du côté visible, pour au moins 80% des particules (14) de charge ayant une dimension de moins de 3,5 mm, la distance entre deux particules (14) de charge voisines est plus petite que 3 mm, de préférence plus petite que 2 mm et notamment plus petite que 1,5 mm.

7. Pièce (1) moulée suivant l'une des revendications précédentes, **caractérisée en ce que** la pièce (1) moulée est fabriquée par moulage par coulée et le traitement du côté visible est effectué après le moulage par coulée.

8. Pièce (1) moulée suivant l'une des revendications précédentes, **caractérisée en ce que** la surface (10) du côté visible est traitée mécaniquement par sablage, par meulage ou par brossage.

9. Pièce (1) moulée suivant l'une des revendications précédentes, **caractérisée en ce que** la surface (10) du côté visible est traitée chimiquement par dissolution ou par attaque.

10. Pièce (1) moulée suivant l'une des revendications précédentes, **caractérisée en ce que** les particules (14) de charge ont une dureté moh plus grande que celle du liant (12).

11. Pièce (1) moulée suivant l'une des revendications précédentes, **caractérisée en ce que** plus de 50%, de préférence plus de 75% des particules (14) de charge ont une dureté moh d'au moins 6, notamment une dureté moh d'au moins 7, et sont de préférence en dioxyde de silicium.

12. Pièce (1) moulée suivant l'une des revendications précédentes, **caractérisée en ce que** la pièce (1) moulée a une forme en trois dimensions qui s'écarte d'une forme en plaque, en ayant au moins une partie (2) en forme de cuvette.

13. Pièce (1) moulée suivant l'une des revendications précédentes, **caractérisée en ce que** l'épaisseur (20) de paroi de la pièce (1) moulée est, au moins par endroit, de préférence sur toute la surface, plus petite que 3 cm, notamment plus petite que 2 cm et de préférence plus petite que 1,5 cm.

14. Procédé de fabrication d'une pièce (1) moulée, comme par exemple un évier de cuisine, un lavabo, une plaque de travail ou analogue, dans lequel on fabrique la pièce (1) moulée en un matériau composite ayant un liant (12) polymère durci et plus de 50% en poids et moins de 85% en poids rapporté à la masse de la pièce (1) moulée des particules (14) de charge, qui y sont incorporées, par moulage dans un moule utilisable, de préférence, plusieurs fois, et dans lequel on traite mécaniquement et/ou chimiquement la pièce (1) moulée après le moulage sur au moins un côté visible, de manière à ce que, par le traitement sur le côté visible, des particules (14) de charge arrivent jusqu'à une surface (10) du côté visible et forment ainsi une partie de la surface (10) du côté visible et sont planarisées, en ce que, dans une région intermédiaire comprise entre deux particules (14) de charge formant la surface (10) du côté visible, la surface (10) du côté visible est formée par le liant (12), et en ce que la pièce (1) moulée a du côté visible, par le traitement, une ondulation perceptible au toucher et/ou visuellement la distance entre deux sommets d'ondulation voisins étant supérieure à 2mm.

15. Procédé suivant la revendication 14, **caractérisé en ce que** le moulage est un procédé de moulage par coulée.
